Europäisches Patentamt

European Patent Office

Office européen des brevets

(11) Veröffentlichungsnummer: **0 179 241**
**A2**

(12) **EUROPÄISCHE PATENTANMELDUNG**

(21) Anmeldenummer: 85111189.8

(22) Anmeldetag: 04.09.85

(51) Int. Cl.⁴: **E06B 3/72** , E06B 3/96 , E06B 3/24

(30) Priorität: 26.09.84 DE 3435300

(43) Veröffentlichungstag der Anmeldung:
30.04.86 Patentblatt 86/18

(84) Benannte Vertragsstaaten:
AT BE CH DE FR GB IT LI NL SE

(71) Anmelder: EFAFLEX Transport- und Lager-Technik
GmbH
Fliederstrasse 14
D-8301 Bruckberg-Edikofen(DE)

(72) Erfinder: Rejc, Gabriel
Mainburger Strasse 28
D-8052 Moosburg(DE)

(74) Vertreter: Grams, Klaus Dieter, Dipl.-Ing. et al
Patentanwaltsbüro Tiedtke-Bühling-Kinne- Grupe-
Pellmann-Grams-Struif Bavariaring 4
D-8000 München 2(DE)

(54) **Plattenförmiges Bauelement.**

(57) Ein plattenförmiges Bauelement für Tore, Türen, Verblendungen oder dergleichen umfaßt eine Füllung und einen die Füllung umschließenden Rahmen. Der Rahmen ist aus Profilstäben mit einem hohlen Rechteckprofil zusammengesetzt, deren dem Rahmeninneren zugewandte Innenwände zumindest eine in Stablängsrichtung verlaufende Nut aufweisen. Die Nuten aller Profilstäbe gehen ineinander über und bilden eine geschlossene umlaufende Nut, in die eine die Füllung bildende Platte mit ihren Rändern eingesetzt ist. Die Nuten dienen ferner zum Verbinden von zwei Profilstäben miteinander, indem die sich zum Nutinneren erweiternde Nut am einen der Profilstäbe in Eingriff mit einem Vorsprung steht, der an einem Verbindungsteil ausgebildet ist, das am anderen der Profilstäbe befestigt ist. Das Verbindungsteil ist aus einem Abschnitt eines weiteren Profilstabes gebildet. Das Bauelement ist mit geringem Arbeits- und Materialaufwand fertigbar, stabil und leicht und darüber hinaus zur Vereinfachung der Reparatur im Falle von Beschädigungen zerlegbar.

Plattenförmiges Bauelement

Die Erfindung bezieht sich auf ein plattenförmiges Bauelement gemäß dem Oberbegriff von Patentanspruch 1.

Ein solches plattenförmiges Bauelement findet beispielsweise Verwendung als Türblatt einer Tür, als Torsegment eines Falttores aus mehreren gelenkig miteinander verbundenen Torsegmenten, als Wandverkleidung oder -verblendung, als Raumteilwand oder dergleichen, wobei vorstehend nicht alle möglichen Anwendungsfälle aufgeführt sind. Der bevorzugte Anwendungsfall für das plattenförmige Bauelement ist allerdings dessen Einsatz bei der Herstellung von Toren und Türen, weswegen im folgenden speziell dieser Anwendungsfalls behandelt wird.

Ein plattenförmiges Bauelement mit den Merkmalen des Oberbegriffs von Patentanspruch 1 ist bekannt. Dabei haben die Profilstäbe des Rahmens üblicherweise ein L-Profil bzw. Winkelprofil. Für einen üblichen rechtwinkligen Rahmen sind vier derartige Profilstäbe an ihren Ecken miteinander durch Schweißen oder Schrauben verbunden. Die die Füllung bildende Platte, bei der es sich üblicherweise um ein Blechteil handelt, ist in den Rahmen eingesetzt und mit diesem verschweißt, verschraubt oder mit Hilfe von zusätzlichen Verbindungsmitteln in Form von Sicherungsleisten oder dergleichen verbunden.

Bei der Verwendung eines solchen plattenförmigen Bauelementes für ein Segment beispielsweise eines Falttores muß gefordert werden, daß das Bauelement möglichst geringes Gewicht hat, damit die erforderlichen Öffnungszeiten und -kräfte möglichst niedrig sind. Im Betrieb kann es vorkommen, daß das Bauelement durch ein dagegenfahrendes Transportfahrzeug beschädigt wird. Die Reparatur des Falttores erfordert in der Regel den Ersatz des beschädigten Segments durch ein neues, wobei üblicherweise eine Reparatur des beschädigten Segments selber aus Zeit- und Kostengründen nicht zweckmäßig ist. In diesem Zusammenhang ist zu fordern, daß die die Segmente bildenden Bauelemente möglichst preisgünstig herstellbar und reparierbar sind. Die genannten Forderungen nach geringem Gewicht, niedrigen Herstellungskosten und Reparaturfähigkeit werden von herkömmlichen Bauelementen nicht hinreichend erfüllt.

Der Erfindung liegt die Aufgabe zugrunde, das gattungsgemäße plattenförmige Bauelement derart auszubilden, daß es leicht ist, niedrige Herstellungskosten hat und auf verhältnismäßig einfache Weise reparierbar ist.

Diese Aufgabe wird erfindungsgemäß durch die Merkmale im kennzeichnenden Teil von Patentanspruch 1 gelöst.

Bei dem erfindungsgemäßen plattenförmigen Bauelement werden zwei Profilstäbe des Rahmens dadurch miteinander verbunden, daß der Vorsprung des Verbindungsteils in die Nut am zugeordneten Profilstab geschoben wird, wobei aufgrund der erfindungsgemäßen Ausbildung dadurch eine in Längsrichtung desjenigen Profilstabes, an dem das Verbindungsteil befestigt ist, zug-und druckfeste Verbindung zwischen den beiden Profilstäben entsteht. Diese Art der Verbindung ist einerseits einfach herstellbar, was die Herstellungskosten des Bauelementes niedrig hält, andererseits aber auch verhältnismäßig einfach lösbar, was Reparaturarbeiten erleichtert. Vom aus den Profilstäben gebildeten Rahmen wird die zumindest eine Platte der Füllung in den Nuten der Profilstäbe gehalten. In die Nuten brauchen die Ränder der Platte lediglich lose eingeschoben zu werden. Sicherungsleisten zum Festhalten der Platte werden nicht benötigt, ein Verschweißen oder dergleichen entfällt. Dies hält einerseits den Montageaufwand niedrig und ermöglicht andererseits die Verwendung beliebiger Plattenwerkstoffe, darunter auch Kunststoffe. Es besteht somit die Möglichkeit, den Plattenwerkstoff unter Beachtung von Preis und Gewicht günstigst zu wählen, wobei weitere Eigenschaften wie Transparenz oder Durchsichtigkeit des Plattenwerkstoffs gefordert werden können und realisierbar sind, denn die Art und Weise, in der der Rahmen des erfindungsgemäßen Bauelementes die Füllung trägt, setzt keine besonderen Plattenwerkstoffeigenschaften voraus.

Die Tatsache, daß beim erfindungsgemäßen Bauelement dieselben Nuten, die die Füllung aufnehmen, zur Herstellung der Verbindung zwischen zwei Profilstäben durch Eingriff mit den Vorsprüngen der Verbindungsteile dienen, führt zu verhältnismäßig einfach ausgebildeten Profilstäben, und erfordert wenig maschinelle Bearbeitung bei der Ausbildung der Verbindungen zwischen den Profilstäben. Beispielsweise entfallen Gehrungsschnitte an den aneinanderstoßenden Enden der Profilstäbe.

Aufgrund der erfindungsgemäßen Ausbildung ist der Materialbedarf und der Arbeitsaufwand bei der Herstellung des Bauelementes verhältnismäßig niedrig und ergibt sich ein steifes, zugleich aber verhältnismäßig leichtes Produkt. Die Art und Weise der Verbindungen zwischen zwei Profilstäben und der Halterung der Füllung ermöglichen eine verhältnismäßig einfache Zerlegung des Bauelementes, so daß dieses im Falle einer Beschädigung durch Ersatz von Teilen des Bauelementes kostengünstig repariert werden kann.

Vorzugsweise weisen alle Profilstäbe des Rahmens und gegebenenfalls zusätzliche Innenstäbe dasselbe hohle Rechteckprofil auf, wobei sowohl die Innenwand als auch die dieser gegenüberliegende Außenwand eines jeden Profilstabes mit zwei parallelen Nuten versehen ist. In weiterer vorteilhafter Ausgestaltung der Erfindung bestehen die Verbindungsteile aus Längenabschnitten eines Profilstabes mit hohlem Rechteckprofil, auf dessen einer Außenseite die Vorsprünge in Form von zwei Leisten mit gleichem Profil wie die Nuten ausgebildet sind. Bei dieser Gestaltung werden lediglich zwei verschiedene Profile benötigt, nämlich ein Profil für die Profilstäbe des Rahmens und für die Verstärkungsstäbe und ein weiteres Profil für die Verbindungsteile, die jeweils in gewünschter Länge vom letztgenannten Profil abgeschnitten werden. Da der Rahmen auch in den Außenwänden seiner Profilstäbe zwei Nuten aufweist, können an diesen Außenwänden auf einfache Weise zusätzliche Elemente wie beispielsweise Dichtungsleisten oder dergleichen befestigt werden.

Weitere vorteilhafte Ausgestaltungen der Erfindung ergeben sich aus den Unteransprüchen sowie der folgenden Beschreibung eines Ausführungsbeispiel unter Bezugnahme auf die Zeichnungen. Es zeigen:

Figur 1 eine vereinfachte Ansicht eines Falttores, bei dessen Segmenten plattenförmige Bauelemente verwendet sind;

Figur 2 eine Ansicht eines plattenförmigen Bauelementes, wie es bei dem Falttor gemäß Figur 1 verwendet ist;

Figur 3 eine vergrößerte Schnittdarstellung gemäß A-B in Figur 2;

Figur 4 einen Querschnitt durch einen Profilstab des Bauelementes gemäß Figur 2;

Figur 5 einen Horizontalschnitt gemäß C-D in Figur 2, wobei zusätzlich Teile eines tragenden Rahmens gezeigt sind;

Figur 6 eine vergrößerte Darstellung der Einzelheit X gemäß Figur 2, teilweise im Schnitt gemäß G-H in Figur 7, zur Erläuterung der Verbindung zwischen zwei aneinanderstoßenden Enden von Profilstäben eines Rahmens des Bauelementes gemäß Figur 2;

Figur 7 eine Schnittdarstellung gemäß E-F in Figur 6;

Figur 8 eine Ansicht eines Längenabschnitts, wie er zur Bildung von Verbindungsteilen benutzt wird;

Figur 9 eine Seitenansicht des Längenabschnitts gemäß Figur 8;

Figur 10 einen Querschnitt durch eine Abwandlung des Profilstabes gemäß Figur 4; und

Figur 11 einen Schnitt durch eine Gummisicherheitsleiste, die am Bauelement ansetzbar ist.

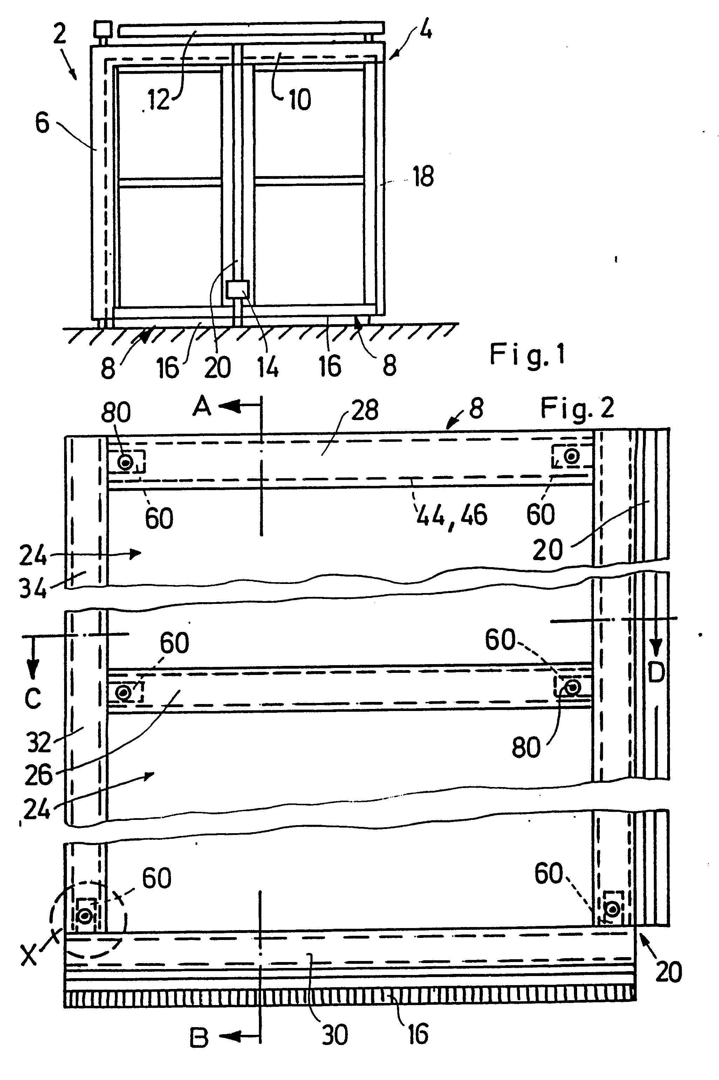

Figur 1 zeigt in Ansicht ein einflügliges Falttor, zu dem zwei gelenkig miteinander verbundenen Segmente 2 und 4 gehören. Der in Fig. 1 gezeigte Flügel könnte jedoch auch einer von zwei Flügeln eines zweiflügligen Falttors sein. Das in Figur 1 linke Segment 2 umfaßt einen tragenden, steifen, L-förmigen Rahmen 6, der auf nicht näher dargestellte Weise oben und unten in Zapfenlagern schwenkbar gelagert ist. In den Rahmen 6 eingesetzt, vom Rahmen 6 getragen und fest mit dem Rahmen 6 verbunden ist ein plattenförmiges Bauelement 8, das im folgenden noch näher erläutert wird. Das in Figur 1 rechte Segment 4 umfaßt einen Tragarm 10, der an seinem in Figur 1 linken Ende gelenkig mit dem Rahmen 6 verbunden ist und von diesem abgestützt wird und der an seinem in Figur 1 rechten Ende mit Hilfe eines nicht dargestellten Laufwagens an einer Schiene 12 aufgehängt ist. Am Tragarm 10 hängt ein plattenförmiges Bauelement 8, das gleiche Ausbildung wie das plattenförmige Bauelement 8 des ersten Segmentes 2 hat. Die beiden plattenförmigen Bauelemente 8 der beiden Segmente 2 und 4 sind miteinander lediglich mit Hilfe eines nicht näher beschriebenen Gelenks 14 nahe den unteren Enden der Bauelemente 8 verbunden. Beide Bauelemente 8 tragen an ihren unteren Rändern als Bodenabschluß eine Bürste 16. Das Bauelement 8 des zweiten Segmentes 4 trägt an seinem in Figur 1 rechten Rand eine Gummisicherheitsleiste 18, und das Bauelement 8 des linken Segmentes 2 trägt an seinem rechten Rand eine Dichtungsleiste 20 aus Gummi.

Das in Figur 1 gezeigte Falttor wird aus der dargestellten Stellung geöffnet durch Schwenken des Rahmens 6 in seinen Zapfenlagern, wobei das erste Segment 2 das zweite Segment 4 mitnimmt, dessen nicht dargestellter Wagen dabei in der Schiene 12 nach links in Figur 1 verfahren wird. Damit diese Öffnungsbewegung und die entsprechende Schließbewegung schnell ausgeführt werden können, sollen die vom Rahmen 6 und vom Tragarm 10 als tragenden Elementen gehaltenen plattenförmigen Bauelemente 8 möglichst geringe Masse haben, was bei den Bauelementen mit der im folgenden beschriebenen Ausbildung der Fall ist. Günstig ist dabei, daß die plattenförmigen Bauelemente 8 insgesamt steife Teile sind, so daß das Falttor gemäß Figur 1 im geschlossenen Zustand tatsächlich den Durchtritt verwehrt im Gegensatz zu Falttoren, bei denen die plattenförmigen Bauelemente 8 durch elastische Bahnen ersetzt sind, die auch bei geschlossenem Falttor von Hand auseinanderbewegt werden können.

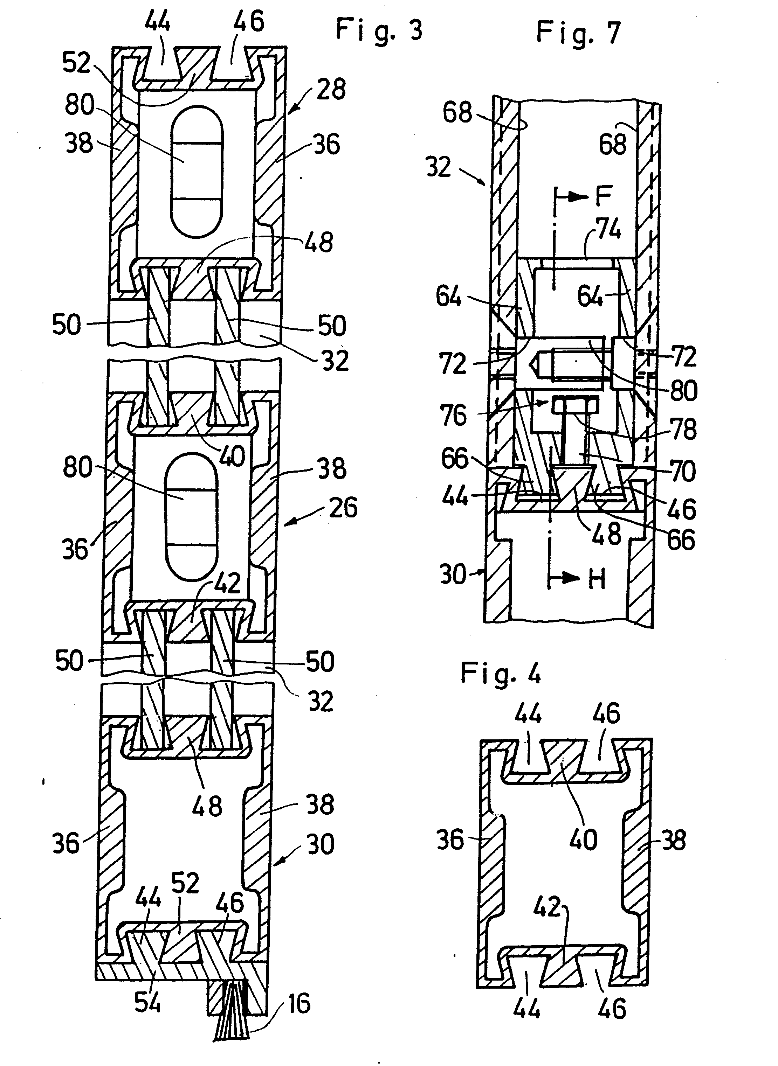

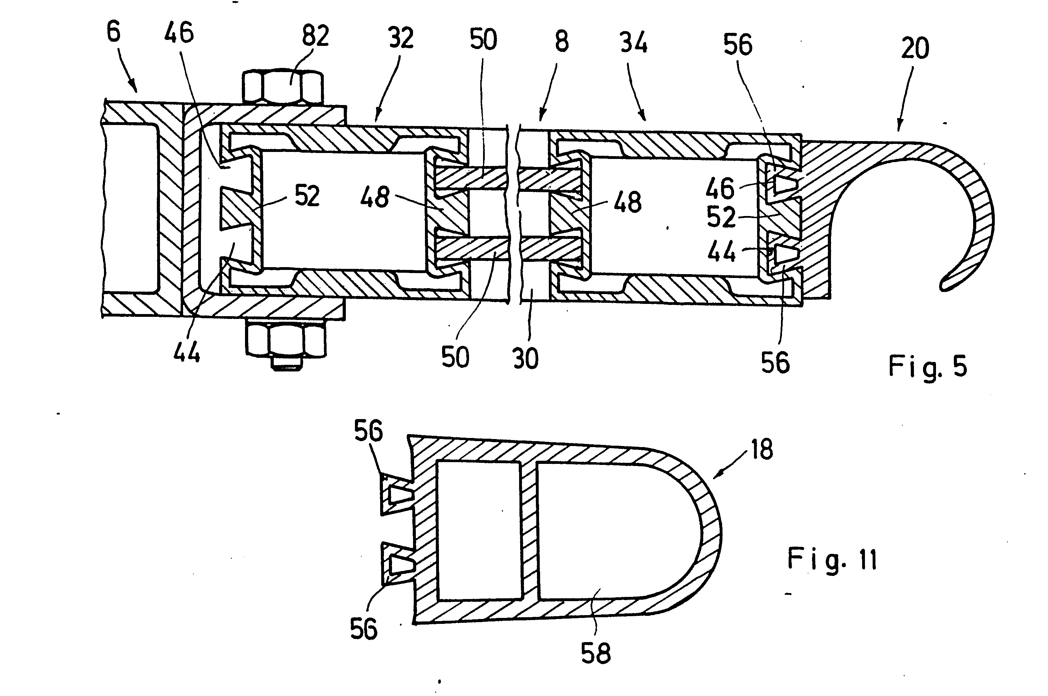

Wie Figur 2 erkennen läßt, besteht das plattenförmige Bauelement 8 aus einem Rahmen 22, einer Füllung 24 und einem Innenstab 26. Wie insbesondere die Figuren 3 und 5 erkennen lassen, ist der Rahmen 22 aufgebaut aus Profilstäben mit gleichem Profil, nämlich einem oberen Profilstab 28, einem unteren Profilstab 30, einem linken Profilstab 32 und einem rechten Profilstab 34 (die Angaben "oben", "unten", "links" und "rechts" beziehen sich dabei auf Figur 2). Die genannten vier Profilstäbe bilden ein Rechteck, an dessen Ecken jeweils zwei Profilstäbe mit ihren Enden zusammenstoßen. Dabei erstreckt sich der untere Profilstab 30 über die gesamte Breite des Rahmens 22, so daß die unteren Enden der beiden seitlichen Profilstäbe 32 und 34 von oben auf das rechte bzw. linke Ende des unteren Profilstabes 30 aufgesetzt sind, wie dies Figur 2 erkennen läßt. Der obere Profilstab 28 ist zwischen die oberen Enden der beiden seitlichen Profilstäbe 32 und 34 eingesetzt, wie dies ebenfalls Figur 2 erkennen läßt. In jedem Fall stößt dabei die Stirnseite eines Profilstabes an eine Wand des jeweils anderen Profilstabes.

Der Innenstab 26 verläuft in ungefähr halber Höhe des Bauelementes 8 parallel zum oberen und unteren Profilstab 28 bzw. 30 und hat gleiche Länge wie der obere Profilstab 28, so daß er ebenfalls zwischen den beiden seitlichen Profilstäben 32 und 30 angeordnet ist, mit denen er in Berührung steht und verbunden ist. Der Innenstab 26 versteift den Rahmen 6 und unterteilt das Rahmen innere in zwei Fächer, so daß die Füllung in jedem der beiden Fächer eine andere Ausbildung erfahren kann, beispielsweise aus unterschiedlichen Werkstoffen bestehen kann. Es versteht sich, daß auch zwei und mehr Innenstäbe 26 vorgesehen sein können, so daß eine dementsprechend große Anzahl von Feldern geschaffen ist. Der folgenden Beschreibung wird jedoch das gezeigte Ausführungsbeispiel mit lediglich einem Innenstab 26 zugrundegelegt.

Die Profilstäbe 28,30,32 und 34 sowie der Innenstab 26 haben sämtlich das in Figur 4 gezeigte Profil. Es handelt sich dabei um ein hohles Rechteckprofil, wobei den vier Seiten des Rechtecks vier Wände des Profil- bzw. Innenstabes entsprechen. Wie in Figur 4 erkennbar ist, handelt es sich dabei um eine außen glatte linke Wand 36, eine ebenfalls außen glatte rechte Wand 38, eine obere Wand 40 und eine untere Wand 42. Sowohl die linke Wand 36 als auch die rechte Wand 38 sind über die Länge des Profil- bzw. Innenstabes in ihrer Mitte mit einer Verdikkung versehen, damit dort ausreichend Material für Gewindebohrungen oder dergleichen zur Verfügung. steht. Die obere Wand 40 ist mit zwei zueinander parallelen, sich über die gesamte Länge des Stabes erstreckenden Nuten 44 und 46 versehen, die nach außen offen sind und ein Schwalbenschwanzprofil aufweisen, so daß sie sich zum Nutinneren erweitern. Auf gleiche Weise ist die untere Wand 42 ausgebildet, so daß das gesamte Profil gemäß Figur 4 bezüglich der Profilmitte punktsymmetrisch ist. Ein Stab mit dem beschriebenen Profil kann beispiels..eise durch Strangr ..sen hergestellt werden.

Die Profilstäbe 28, 30, 32 und 34 sind nun derart zum Rahmen 22 zusammengefügt, daß dem Rahmeninneren jeweils eine Wand 40 oder 42 mit den Nuten 44 und 46 zugewandt ist, die dann im Rahmen eine Innenwand 48 des jeweiligen Profilstabes bildet. Der Innenstab 26 ist so zwischen die beiden Profilstäbe 32 und 34 eingefügt, daß seine mit den Nuten 44 und 46 versehenen Wände 40 und 42 dem Rahmen zugewandt sind (und nicht zur Vorderseite oder zur Rückseite des Bauelementes offen sind). Aufgrund dieser Ausbildung und Anordnung gehen die Nuten 44 und 46 in den Innenwänden 48 sowie den Wänden 40 und 42 des Verstärkungsstabes ineinander über, so daß im Rahmen 22 sowohl oberhalb des Verstärkungsstabes 26 als auch unterhalb desselben jeweils zwei geschlossen umlaufende Nuten ausgebildet sind, deren Abschnitte die Nuten 44 und 46 bilden. In jede dieser geschlossenen umlaufenden Nuten ist eine im wesentlichen ebene Platte 50 eingesetzt, die beispielsweise aus einem leichten, hinreichend festen und gegebenenfalls durchsichtigen oder transparenten Kunststoff besteht. Wie sich aus der vorstehenden Beschreibung ergibt, wird jede Platte 50 von den Nuten hinreichend gehalten und gegen Herausfallen aus dem Rahmen 22 gesichert, so daß eine zusätzliche Fixierung nicht notwendig ist.

Beim vorstehend beschriebenen Ausführungsbeispiel bilden die vier Platten 50 die Füllung 24 des Bauelementes 8. Dabei sind jeweils zwei Platten 50 zueinander parallel unter Bildung eines geringen Zwischenraumes angeordnet, was zu günstigen Wärme- und Schallisolationseigenschaften führt. Es versteht sich, daß die Füllung 24 auch anders aufgebaut sein kann. Beispielsweise kann im oberen und unteren Bereich des Bauelementes 8 jeweils nur eine Platte 50 vorgesehen sein. Ferner möglich ist, dann, wenn parallele Platten einen Zwischenraum bilden, diesen Zwischenraum mit zusätzlichem Material zu Isolationszwecken zu füllen. Schließlich brauchen die beiden zueinander parallelen Platten 50 auch nicht gleiche Ausbildung zu haben. Es könnte beispielsweise auch auf der Außenseite des Bauelementes 8 eine festere und dickere Platte 50 vorgesehen sein als auf der Innenseite des Bauelementes.

Es zeigt sich jedenfalls, daß die beschriebene Ausbildung des Bauelementes zahlreiche Gestaltungsmöglichkeiten hinsichtlich der Füllung 24 zuläßt, wobei der Materialaufwand gering gehalten werden kann und die Montage, nämlich das Einsetzen in die geschlossen umlaufenden Nuten, jeweils wenig Arbeitsaufwand erfordert.

Da die bezüglich ihrer Profilmitte symmetrisch ausgebildeten Profilstäbe derart angeordnet sind, daß ihre Innenwände 48 jeweils Wände mit Nuten 44 und 46 sind, sind auch die den Innenwänden 48 gegenüberliegenden Außenwände 52 mit den Nuten 44 und 46 versehen, so daß der Rahmen 22 entlang seinem gesamten Außenrand mit den Nuten 44 und 46 versehen ist. Dies ermöglicht es, auf einfache Weise am Außenrand des Bauelementes 8 weitere Teile anzubringen. So ist beispielsweise die Bürste 16 an der Außenwand 52 des unteren Profilstabes 30 mit Hilfe eines Bürstenträgers 54 angebracht, der zwei in die Nuten 44 und 46 der Außenwand 52 eingesetzte Vorsprünge aufweist, wie dies Figur 3 zeigt. Die Figuren 2 bis 7 zeigen das Bauelement 8, das Bestandteil des ersten Segmentes 2 ist. Dieses Bauelement 8 trägt an seinem rechten Rand die aus Gummi gefertigte Dichtungsleiste 20, deren Profil in Figur 5 erkennbar ist. An der Dichtungsleiste 20 sind zwei Vorsprünge in Form von Leisten 56 angeformt, die sich über die gesamte Länge der Dichtungsleiste 20 erstrekken und in die Nuten 44 und 46 der Außenwand 52 des rechten Profilstabes 34 eingesetzt sind. Bei dem Bauelement 8, das Bestandteil des zweiten Segmentes 4 ist, ist die Dichtungsleiste 20 ersetzt durch eine Gummisicherheitsleiste 18, wie sie in Figur 11 gezeigt ist, die eine Kammer 58 aufweist, die mit Luft oder einem anderen Gas gefüllt ist, so daß ein Stoß gegen die Gummileiste 18 den Druck des Gases erhöht und diese Druckerhöhung als Signal für einen Fremdkörperkontakt des Falttores ausgewertet werden kann.

Die vorstehend kurz erläuterten Teile Bürstenträger 54, Dichtungsleiste 20 und Gummisicherheitsleiste 18 sind nicht notwendigerweise am Bauelement 8 angebracht. Sie zeigen jedoch, daß und wie auf einfache Weise die in den Profilstäben ausgebildeten Nuten zusätzlich dazu benutzt werden können, weitere Teile am Bauelement 8 anzubringen.

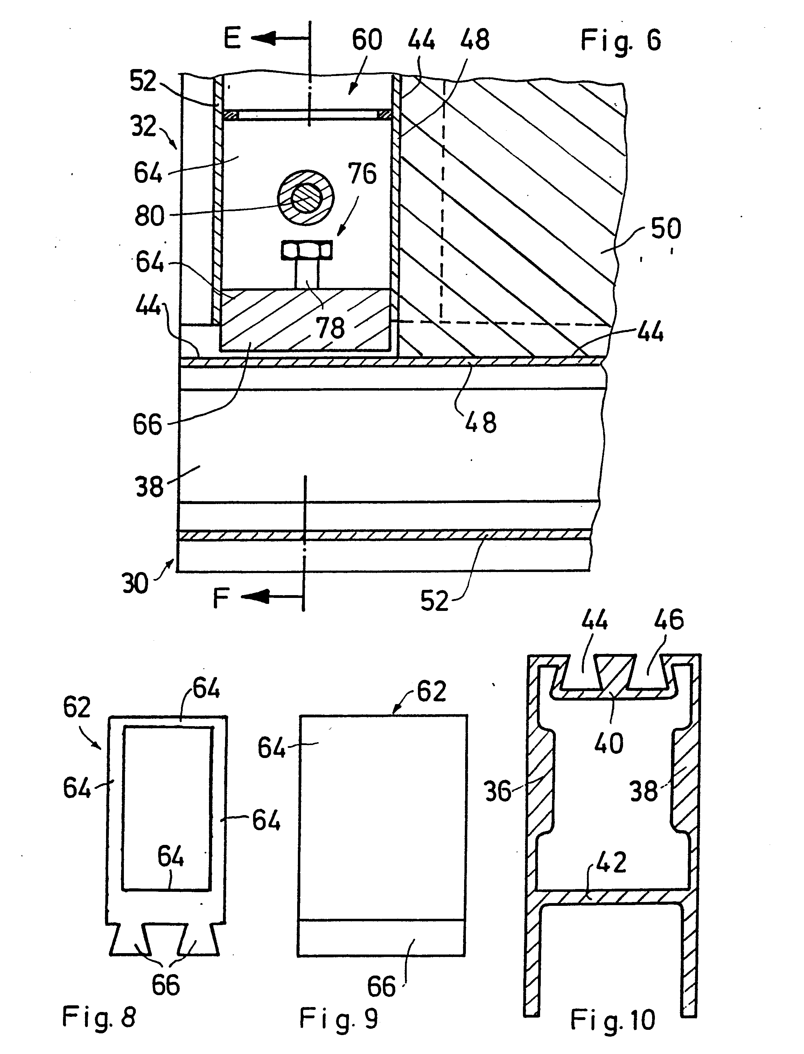

Eine weitere Funktion erfüllen die Nuten 44 und 46 in den Profilstäben im Zusammenhang mit dem Verbinden von zwei aneinanderstoßenden Enden der Profilstäbe bzw. eines Endes des Innenstabes 26 mit dem angrenzenden Profilstab. Diese Verbindungen haben sämtlich gleiche Ausbildung, so daß die folgende ausführliche Beschreibung der Verbindung zwischen dem unteren Ende des linken Profilstabes 32 und dem linken Ende des unteren Profilstabes 30 sinngemäß für alle vorstehend genannten Verbindungen gilt. Der Profilstab 32 ist an seinem unteren Ende gerade abgeschnitten; der Profilstab 30 ist an seinem linken Ende ebenfalls gerade abgeschnitten. Mit seiner unteren Stirnfläche ist der Profilstab 32 auf die Innenwand 48 des Profilstabes 30 gesetzt, wie dies in Figur 6 erkennbar ist. Dabei ergibt sich aus den Nuten 44 die geschlossen umlaufende Nut zur Aufnahme der Platte 50, wie dies ausschnittsweise ebenfalls in Figur 6 erkennbar ist.

Im unteren Ende des Profilstabes 32 ist ein Verbindungsteil 60 befestigt. Das Verbindungsteil 60 ist aus einem Längenabschnitt 62 eines nicht dargestellten Profilstabes gebildet, der ein hohles Rechteckprofil hat, wie insbesondere Figur 8 erkennen läßt. Der Längenabschnitt 62 wird durch Abschneiden eines Stücks geeigneter Länge vom Verbindungsteil-Profilstab gewonnen und weist dementsprechend vier im wesentlichen ebene, paarweise zueinander parallele Wände 64 auf. An der in Figur 8 unteren Wand 64 des Längenabschnitts 62 sind zwei Vorsprünge 66 angeformt, die als sich in Längsrichtung des Verbindungsteil-Profilstabes erstreckende Leisten ausgebildet sind und das gleiche Schwalbenschwanzprofil haben wie die Nuten 44 und 46 in den Profilstäben bzw. dem Verstärkungsstab. Die Außenabmessungen des Längenabschnitts 62 und somit des Verbindungsteils 60 sind derart gewählt, daß das Verbindungsteil 60 bündig in das Innere des Profilstabes 32 paßt, und zwar derart, daß zwei gegenüberliegende der Wände 64 an Innenseiten 68 des Profilstabes 32 anliegen, wie dies in Figur 7 gezeigt ist.

Nachdem der auf vorstehend beschriebene Weise ausgebildete Längenabschnitt 62 in dargestellter Weise mit einer Gewindebohrung 70, zwei fluchtenden Öffnungen 72 sowie einer Öffnung 74 versehen worden ist, so daß das Verbindungsteil 60 fertiggestellt ist, kann das Verbindungsteil 60 in Eingriff mit dem Ende des Profilstabes 30 gebracht werden, indem die beiden Vorsprünge 66 in die Nuten 44 und 46 geschoben werden, so daß das Verbindungsteil 60 relativ zum Profilstab 30 die in den Figuren 6 und 7 dargestellte Stellung einnimmt. In der gewünschten Stellung wird dann das Verbindungsteil 60 mit Hilfe einer Spanneinrichtung 76 fixiert, die beim dargestellten Ausführungsbeispiel eine Schraube 78 umfaßt, die in die Gewindebohrung 70 geschraubt ist und sich mit ihrem Schaftende an der Innenwand 48 abstützt. Es ist erkennbar, daß durch Anziehen der Schraube 78 die Vorsprünge 66 mit ihren Flanken gegen die entsprechenden Flanken der Nuten 44 und 46 gezogen werden und dadurch eine Verspannung erfolgt.

Auf das fixierte Verbindungsteil 60 ist das untere Ende des Profilstabes 32 gesetzt, das am Verbindungsteil 60 mit Hilfe einer Schraubverbindung 80 befestigt ist.

Auf vorstehend beschriebene Weise ist eine steife und feste Verbindung zwischen den zwei aneinanderstoßenden Enden von zwei Profilstäben erzielt. Hierzu werden in sinnvoller Weise die in den Profilstäben ohnehin ausgebildeten Nuten 44 und 46 benutzt. Das jeweils benötigte Verbindungsteil 60 wird in geeigneter Länge von einem passenden Profilstab abgeschnitten. Somit kann der gesamte Rahmen 22 einschließlich des Verstärkungsstabes 26 und der Verbindungsteile 60 aus Profilstäben mit lediglich zwei verschiedenen Profilen (und Normteilen wie Schrauben und dergleichen) gefertigt werden. Die Verbindungen sind auf einfache Weise lösbar, so daß das Bauelement im Falle einer Beschädigung zerlegt und durch Ersatz der beschädigten Teile repariert werden kann.

Di Montage des vorstehend beschriebenen Bauelementes 8 erfolgt in der Weise, daß die Profilstäbe und die gegebenenfalls vorhandenen Innenstäbe zunächst derart zusammengefügt werden, daß an einer Seite noch offene Fächer entstehen und daß dann in diese Fächer von der offenen Seite die Füllungen eingeschoben werden, wonach die Fächer auch an der bis dahin noch offenen Seite geschlossen werden. Beim dargestellten und erläuterten Ausführungsbeispiel des Bauelementes 8 werden beispielsweise zunächst am Profilstab 32 die beiden oberen Verbindungsteile 60 an den gewünschten Orten befestigt und werden am Profilstab 34 ebenfalls die beiden oberen Verbindungsteile 60 an den gewünschten Orten befestigt. Danach werden dann der obere Profilstab 28 sowie der Innenstab 26 mit den Verbindungsteilen 60 am Profilstab 32 verbunden. Der Profilstab 32, der Innenstab 26 und der Profilstab 28 bilden dann ein auf einer Seite, nämlich rechts in Figur 2, offenes Fach, in das die beiden oberen Platten 50 von rechts eingeschoben werden, wobei die Ränder der Platten von den Nuten 44 und 46 im Innenstab 26 und im Profilstab 28 aufgenommen und geführt werden. Wenn die Platten 50 eingeschoben sind, werden die am Profilstab 34 befestigten Verbindungsteile 60 in die offenen rechten Enden des Innenstabs 26 und des Profilstabs 28 geschoben und mit den beiden letztgenannten Stäben verbunden. Dadurch ist das Fach, in das zuvor die beiden Platten 50 eingeschoben worden sind, geschlossen und sind die beiden Plat ten gesichert und gehalten, ohne daß hierzu Sicherungsleisten oder dergleichen hätten benutzt werden müssen. Zu diesem Zeitpunkt der Montage bilden die beiden Profilstäbe 32 und 34 sowie der Innenstab 26 ein weiteres, unten offenes Fach, in das dann von unten (in Figur 2) die entsprechenden Platten 50 auf gleiche Weise eingeschoben werden, wie dies vorstehend erläutert ist. Nach dem Einschieben der beiden letztgenannten Platten wird dann am übrigen Rahmen der Profilstab 30 mit Hilfe der diesem zugeordneten zwei Verbindungsteile 60 befestigt und das untere Fach des Bauelementes 8 geschlossen.

Es versteht sich, daß die den Rahmen bildenden Profilstäbe nicht genau in der Weise aneinanderstoßen müssen, wie dies in Figur 2 gezeigt ist. Abweichend von dargestellten Ausführungsbeispielen könnte beispielsweise der Profilstab 30 mit seinen Stirnseiten gegen die Innenwände der Profilstäbe 32 und 34 stoßen. Wie benachbarte Enden der Profilstäbe aneinanerstoßen, richtet sich nach dem jeweiligen Anwendungsfall unter Berücksichtigung der Forderung, daß eine einwandfreie Montage des Bauelementes möglich sein muß.

Die Art und Weise der Verbindung oder Befestigung des vorstehend ausführlich erläuterten Bauelementes 8 an anderen Teilen oder Vorrichtungen richtet sich nach dem jeweiligen Anwendungsfall. Für den Anwendungsfall des Falttores gemäß Figur 1 ist in Figur 5 lediglich angedeutet, daß das Bauteil 8 mit seinem linken Profilstab 32 in den Rahmen 6 eingeschoben und mit diesem mit Hilfe von Schrauben 82 verschraubt ist.

Es versteht sich, daß zahlreiche Abwandlungen des vorstehend beschriebenen Ausführungsbeispiels möglich sind, ohne den Rahmen der Erfindung zu verlassen. Beispielsweise brauchen nicht beide Wände 40 und 42 der Profilstäbe gleiche Ausbildung zu haben. Vielmehr kann diejenige Wand 42, die im Rahmen 22 keine Innenwand bildet, ohne Nuten 44 und 46 ausgebildet sein, wie dies in Figur 10 in Abwandlung von Figur 4 gezeigt ist, wenn auf die Vorteile der Nuten am Außenrand des Rahmens verzichtet werden kann.

## Ansprüche

1. Plattenförmiges Bauelement für Tore, Türen oder Verblendungen, mit einer Füllung und einem die Füllung umschließenden Rahmen, wobei die Füllung zumindest eine im wesentlichen ebene Platte aufweist und wobei der Rahmen aus geraden Profilstäben aufgebaut ist, die an ihren aneinanderstoßenden Enden miteinander verbunden sind, dadurch gekennzeichnet, daß die Profilstäbe (28, 30, 32, 34) ein hohles Rechteckprofil aufweisen und eine Innenwand (48) haben, die zum Rahmeninneren gewandt ist und von einer der den Seiten des Rechteckprofils entsprechenden Wände des jeweiligen Profilstabes gebildet ist, daß in dieser Innenwand zumindest eine in Stablängsrichtung verlaufende Nut (44,46) ausgebildet ist, die sich zum Nutinneren erweitert, daß die zumindest eine ebene Platte (50) mit ihren Rändern in die Nuten der Profilstäbe eingesetzt ist, und daß jeweils zwei Profilstäbe an ihren aneinanderstoßenden Enden miteinander dadurch verbunden sind, daß am Ende eines der beiden Profilstäbe ein Verbindungsteil (60) befestigt ist, das zumindest einen Vorsprung (66) aufweist, der in die zumindest eine Nut (44, 46) am anderen der beiden Profilstäbe eingreift und die Flanken der Nut formschlüssig hintergreift.

2. Bauelement nach Anspruch 1, dadurch gekennzeichnet, daß alle den Rahmen (22) bildenden Profilstäbe (28, 30, 32, 34) gleich ausgebildete Innenwände (48) aufweisen.

3. Bauelement nach Anspruch 1 oder 2, dadurch gekennzeichnet, daß die auf der Außenseite des Rahmens (22) liegende Außenwand (52) des jeweiligen Profilstabes (28,30,32,34) bezüglich der Profilmitte symmetrisch zur Innenwand (48) ausgebildet ist.

4. Bauelement nach Anspruch 3, dadurch gekennzeichnet, daß das Profil punktsymmetrisch bezüglich der Profilmitte ist.

5. Bauelement nach einem der Ansprüche 1 bis 4, dadurch gekennzeichnet, daß der Rahmen (22) rechtekkig ist.

6. Bauelement nach einem der Ansprüche 1 bis 5, dadurch gekennzeichnet, daß der Rahmen (22) durch mindestens einen Innenstab (26) versteift ist, der durch das Rahmeninnere verläuft, daß der Innenstab ein hohles Rechteckprofil aufweist und daß die dem Rahmen zugewandten Wände (40,42) des Innenstabes auf gleiche Weise mit zumindest einer Nut (44,46) versehen sind wie die Innenwände (48) der Profilstäbe (28,30,32,34) des Rahmens.

7. Bauelement nach Anspruch 6, dadurch gekennzeichnet, daß der Innenstab (26) gleiches Profil wie die Profilstäbe (28, 30, 32, 34) hat.

8. Bauelement nach Anspruch 6 oder 7, dadurch gekennzeichnet, daß der Innenstab (26) an jedem seiner Enden auf gleiche Weise mit einem benachbarten Profilstab (32, 34) verbunden ist wie zwei Profilstäbe an ihren Enden miteinander.

9. Bauelement nach einem der Ansprüche 1 bis 8, dadurch gekennzeichnet, daß die zumindest eine Nut (44, 46) ein Schwalbenschwanzprofil hat.

10. Bauelement nach einem der Ansprüche 1 bis 8, dadurch gekennzeichnet, daß die zumindest eine Nut (44, 46) ein Hammerkopfprofil hat.

11. Bauelement nach einem der Ansprüche 1 bis 10, dadurch gekennzeichnet, daß zwei zueinander parallele Nuten (44, 46) in der Innenwand (48) des jeweiligen Profilstabes (28, 30, 32, 34) bzw. den Wänden (40, 42) des Innenstabes (26) ausgebildet sind.

12. Bauelement nach Anspruch 11, dadurch gekennzeichnet, daß die Füllung (24) zwei im wesentlichen ebene Platten (50) aufweist, von denen die eine mit ihren Rändern jeweils in der einen der beiden Nuten (44, 46) und die andere mit ihren Rändern jeweils in der anderen der beiden Nuten (44, 46) sitzt.

13. Bauelement nach einem der Ansprüche 1 bis 12, dadurch gekennzeichnet, daß das Verbindungsteil (60) für den Eingriff in jede der Nuten (44, 46) des benachbarten Profilstabes (28, 30, 32, 34) einen Vorsprung (66) aufweist.

14. Bauelement nach einem der Ansprüche 1 bis 13, dadurch gekennzeichnet, daß der Vorsprung (66) gleiches Profil wie die Nut (44, 46) hat, in die er eingreift.

15. Bauelement nach einem der Ansprüche 1 bis 14, dadurch gekennzeichnet, daß der Vorsprung (66) als sich in Nutlängsrichtung erstreckende Leiste ausgebildet ist.

16. Bauelement nach Anspruch 15, dadurch gekennzeichnet, · daß das Verbindungsteil (60) aus einem Längenabschnitt (62) eines Profilstabes gebildet ist.

17. Bauelement nach Anspruch 16, dadurch gekennzeichnet, daß der Verbindungsteil-Profilstab ein hohles Rechteckprofil hat.

18. Bauelement nach Anspruch 17, dadurch gekennzeichnet, daß das Verbindungsteil (60) in das Innere des Rahmen-Profilstabes (28, 30, 32, 34) bzw. Innenstabes (26), an dem es befestigt ist, eingesetzt ist.

19. Bauelement nach Anspruch 18, dadurch gekennzeichnet, daß das Verbindungsteil (60) mit zumindest zwei gegenüberliegenden Seiten an Innenseiten (68) des Profilstabes (28, 30, 32, 34) bzw. Innenstabes (26) anliegt.

20. Bauelement nach einem der Ansprüche 1 bis 19, gekennzeichnet durch eine Spanneinrichtung (76), die das Verbindungsteil (60) von der zugeordneten Innenwand (48) wegdrückt.

21. Bauelement nach Anspruch 20, dadurch gekennzeichnet, daß die Spanneinrichtung (76) eine Schraube (78) umfaßt, die in das Verbindungsteil (60) oder die zugeordnete Innenwand (48) geschraubt ist und sich abstützt am jeweils anderen Element (Innenwand oder Verbindungsteil).

Fig.1

Fig.2

0 179 241

Fig. 3    Fig. 7

Fig. 4

Fig. 5

Fig. 11

0 179 241

Fig. 6

Fig. 8

Fig. 9

Fig. 10